# EUROPÄISCHE PATENTSCHRIFT

(11) **EP 3 110 651 B1**
(45) Veröffentlichungstag und Bekanntmachung des Hinweises auf die Patenterteilung: **09.11.2022**
(21) Anmeldenummer: 14821177.4
(22) Anmeldetag: 22.12.2014
(51) Int. Cl.: B60L 3/10, B60L 3/12, B60W 10/08

(54) **STEUEREINRICHTUNG UND VERFAHREN ZUR ANTRIEBSSCHLUPFREGELUNG FÜR EIN ELEKTRISCHES ANTRIEBSSYSTEM**
CONTROL DEVICE AND METHOD FOR TRACTION SLIP CONTROL FOR AN ELECTRIC DRIVE SYSTEM
DISPOSITIF DE CONTRÔLE ET PROCÉDÉ DE CONTRÔLE D'ANTIPATINAGE D'UN SYSTÈME D'ENTRAÎNEMENT ÉLECTRIQUE

(30) Priorität: 27.02.2014 DE 102014203565
(43) Veröffentlichungstag der Anmeldung: 04.01.2017
(73) Patentinhaber: Robert Bosch GmbH, 70442 Stuttgart (DE)
(72) Erfinder: KRUIJSWIJK, Emile, NL-5038 SB Tilburg (NL); KUEHL, Julien, 71636 Ludwigsburg (DE); BECKER, Markus, 71732 Tamm (DE); SCHULTE-COERNE, Vincent, 71717 Beilstein (DE)
(86) Internationale Anmeldenummer: PCT/EP2014/078962
(87) Internationale Veröffentlichungsnummer: WO 2015/128032

(56) Entgegenhaltungen:
- EP-A1- 2 527 190
- EP-A1- 2 527 190
- EP-A2- 1 389 555
- EP-A2- 1 389 555
- WO-A1-2013/157484
- DE-A1-102010 062 646
- DE-A1-102010 062 646
- JP-A- H08 182 118
- US-A1- 2013 253 755
- US-A1- 2013 253 755
- Zwyssig Christof: "Sensorlos ab Stillstand bis eine Million Umdrehungen pro Minute", , 28 February 2013 (2013-02-28), pages 1-3, XP055806094, Retrieved from the Internet: URL:https://www.celeroton.com/fileadmin/us er_upload/medien/Celeroton_Polydrive_Okt13 .pdf [retrieved on 2021-05-20]
- Mertens Frank: "Ideen auf den Weg bringen", , 31 October 2010 (2010-10-31), pages 1-52, XP055806098, Retrieved from the Internet: URL:https://www.automobil-elektronik.de/wp -content/uploads/sites/7/2011/04/ael_5_10_ internet.pdf [retrieved on 2021-05-20]

## Beschreibung

Die Erfindung betrifft eine Steuereinrichtung sowie ein Verfahren zur Antriebsschlupfregelung in einem elektrischen Antriebssystem, insbesondere in elektrisch betriebenen Fahrzeugen mit Elektromotoren.

### Stand der Technik

In heutigen Kraftfahrzeugen werden häufig zusätzliche automatische und halbautomatische elektronische System integriert, welche die Fahrstabilität des Fahrzeugs verbessern, beispielsweise Antiblockiersysteme (ABS), elektronische Stabilitätsprogramme (ESP) oder Traktionskontrollsysteme (TCS). Bei Traktionskontrollsystemen sind eine Vielzahl von Sensoren notwendig, deren Messwerte direkt oder indirekt auf den Schlupf zwischen Untergrund und Fahrzeugrad schließen lassen. Übliche Sensoren sind Lenkwinkelsensoren, Drehratensensoren, Beschleunigungssensoren und Radgeschwindigkeitssensoren.

Die europäische Patentanmeldung EP 2 527 130 A1 betrifft ein Elektrofahrzeug mit einer Antischlupfregelung. Unterhalb einer vorbestimmten Geschwindigkeit wird das Drehmoment eines elektrischen Antriebs auf einen vorgegebenen Wert begrenzt. Oberhalb der vorbestimmten Geschwindigkeit wird die Drehgeschwindigkeit der angetriebenen Räder mit der Drehgeschwindigkeit der nicht angetriebenen Räder verglichen, um daraus auf einen möglichen Schlupf zu schließen.

DE 10 2010 062 646 A1 offenbart ein Antriebssystem und ein Verfahren zur Bestimmung einer Drehzahl eines angetriebenen Rads. Das System umfasst einerseits einen Drehwinkelsensor zur Bestimmung des Drehwinkels eines elektrischen Antriebs. Darüber umfasst das Systen weitere Sensoren, insbesondere anderer Drehzahlsensoren, für die Berechung der Raddrehzahlen.

Aus Zwyssig Christof: "Sensorlos ab Stillstand bis eine Million Umdrehungen pro Minute", 28. Februar 2013 (2013-02-28), Seiten 1-3, XP055806094, ist eine Beobachtereinheit bekannt. JP H08 182118 A offenbart eine Steuereinrichtung sowie ein Verfahren zur Antriebsschlupfregelung.

Es besteht jedoch ein Bedarf an Lösungen für eine Antriebsschlupfregelung in elektrischen Antriebssystemen, bei denen der Implementierungsaufwand der Regelung möglichst gering ist. Insbesondere besteht ein Bedarf nach einer Antriebsschlupfregelung, welche keine Raddrehzahlsensoren bzw. Radgeschwindigkeitssensoren beinhaltet.

### Offenbarung der Erfindung

Die vorliegende Erfindung schafft daher gemäß einem Aspekt eine Steuereinrichtung für einen eine n-phasige elektrische Maschine, n≥1, speisenden Spannungswandler eines elektrisch betriebenen Fahrzeugs, mit einer Beobachtereinheit, welche dazu ausgelegt ist, eine aktuelle Drehzahl der elektrischen Maschine und einen aktuellen Ausgabestrom des Spannungswandlers zu ermitteln, einer Berechnungseinheit, welche mit der Beobachtereinheit gekoppelt ist, und welche dazu ausgelegt ist, in Abhängigkeit von der ermittelten aktuellen Drehzahl eine momentane Radgeschwindigkeit der Räder des Fahrzeugs zu berechnen, und einer Schlupfregeleinheit, welche mit der Berechnungseinheit gekoppelt ist, und welche dazu ausgelegt ist, den Ausgabestrom des Spannungswandlers zumindest temporär mit einem Stromkorrekturbetrag zu beaufschlagen, wenn die momentane Änderung der Radgeschwindigkeit der Räder einen ersten vorbestimmten Schwellwert überschreitet.

Die vorliegende Erfindung schafft gemäß einem weiteren Aspekt ein elektrisches Antriebssystem für ein elektrisch betriebenes Fahrzeug, mit einer n-phasigen elektrischen Maschine, mit n≥1, einem Spannungswandler, welcher mit der n-phasigen elektrischen Maschine gekoppelt ist, und welcher dazu ausgelegt ist, eine n-phasige Versorgungsspannung für die elektrische Maschine bereitzustellen, und einer erfindungsgemäßen Steuereinrichtung, welche mit der elektrischen Maschine und dem Spannungswandler gekoppelt ist, und welche dazu ausgelegt ist, ein Ausgabestromregelsignal für den Spannungswandler zur Antriebsschlupfregelung bereitzustellen.

Die vorliegende Erfindung schafft gemäß einem weiteren Aspekt ein elektrisch betriebenes Fahrzeug mit einem erfindungsgemäßen elektrischen Antriebssystem.

Die vorliegende Erfindung schafft gemäß einem weiteren Aspekt ein Verfahren zur Antriebsschlupfregelung in einem elektrischen Antriebssystem für ein elektrisch betriebenes Fahrzeug, welches einen eine n-phasige elektrische Maschine, n≥1, speisenden Spannungswandler eines elektrisch betriebenen Fahrzeugs aufweist. Das Verfahren umfasst die Schritte des Ermittelns einer aktuellen Drehzahl der elektrischen Maschine und eines aktuellen Ausgabestroms des Spannungswandlers, des Berechnens einer momentanen Radgeschwindigkeit der Räder des Fahrzeugs in Abhängigkeit von der ermittelten aktuellen Drehzahl, und des zumindest temporären Beaufschlagens des Ausgabestroms des Spannungswandlers mit einem mit einem Stromkorrekturbetrag, wenn die momentane Änderung der Radgeschwindigkeit der Räder einen ersten vorbestimmten Schwellwert überschreitet.

### Vorteile der Erfindung

Eine Idee der vorliegenden Erfindung ist es, ein Antriebsschlupfregelungssystem in einem elektrisch betriebenen Fahrzeug wie beispielsweise einem Elektroauto oder einem Hybridfahrzeug zu realisieren, welches in dem elektrischen Antriebssystem bereits vorhandene Signalaufnehmer bzw. bekannte elektrische Parameter des Systems nutzt, um eine Entscheidung darüber treffen zu können, ob und in welchem Maße das Sollmoment über eine Anpassung des Ausgabestroms des Spannungswandlers des elektrischen Antriebssystems reduziert werden soll. Ein Vorteil bei der erfindungsgemäßen Vorgehensweise ist es, dass das Sollmoment immer dahingehend angepasst werden kann, dass möglichst viel Moment des Antriebs auf die Fahrbahn übertragen und ein Durchdrehen der Räder vermieden werden kann.

Ein erheblicher Vorteil dieser Vorgehensweise besteht darin, dass keine zusätzlichen Sensoren wie Lenkwinkelsensoren, Drehratensensoren, Beschleunigungssensoren und Radgeschwindigkeitssensoren in dem elektrischen Antriebssystem bzw. dem Fahrzeug implementiert werden müssen, so dass die Implementierungskosten der Antriebsschlupfregelung gering gehalten werden können.

Die Erfindung kann in Fahrzeugen mit elektrischem Antrieb, wie beispielsweise Frontantrieb, Heckantrieb oder Allradantrieb eingesetzt werden. Elektrisch betriebene Fahrzeuge im Sinne der Erfindung können Fahrzeuge mit einem oder mehreren Elektromotoren sein, welche gegebenenfalls zusätzlich noch über Verbrennungsmotoren verfügen können.

Erfindungsgemäß ist die Berechnungseinheit dazu ausgelegt sein, aus dem ermittelten aktuellen Ausgabestrom eine aktuelle Fahrzeuggeschwindigkeit des Fahrzeugs zu berechnen und die berechnete aktuelle Fahrzeuggeschwindigkeit des Fahrzeugs mit der von der ermittelten aktuellen Drehzahl abhängigen Radgeschwindigkeit der Räder des Fahrzeugs zu vergleichen, und den Ausgabestrom des Spannungswandlers zumindest temporär mit einem Stromkorrekturbetrag zu beaufschlagen, wenn die Radgeschwindigkeit der Räder von der berechneten aktuellen Fahrzeuggeschwindigkeit des Fahrzeugs um mehr als einen zweiten vorbestimmten Schwellwert abweicht.

Gemäß einer weiteren Ausführungsform der Steuereinrichtung kann die Berechnungseinheit weiterhin dazu ausgelegt sein, aus dem ermittelten aktuellen Ausgabestrom ein aktuelles Antriebsmoment zu berechnen, das berechnete aktuelle Antriebsmoment um einen aktuellen Fahrwiderstand zur Berechnung eines an den Rädern anliegenden Antriebsmoments zu bereinigen und das bereinigte an den Rädern anliegende Antriebsmoment zur Berechnung der aktuellen Fahrzeuggeschwindigkeit des Fahrzeugs heranzuziehen.

Gemäß einer weiteren Ausführungsform der Steuereinrichtung kann die Schlupfregeleinheit weiterhin dazu ausgelegt sein, den Ausgabestrom des Spannungswandlers zumindest temporär mit einem Stromkorrekturbetrag zu beaufschlagen, wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht.

Erfindungsgemäß umfasst das Verfahren weiterhin die Schritte des Berechnens einer aktuellen Fahrzeuggeschwindigkeit des Fahrzeugs aus dem ermittelten aktuellen Ausgabestrom, des Vergleichens der berechneten aktuellen Fahrzeuggeschwindigkeit des Fahrzeugs mit der von der ermittelten aktuellen Drehzahl abhängigen Radgeschwindigkeit der Räder des Fahrzeugs, und des zumindest temporären Beaufschlagens des Ausgabestroms des Spannungswandlers mit einem Stromkorrekturbetrag, wenn die Radgeschwindigkeit der Räder von der berechneten aktuellen Fahrzeuggeschwindigkeit des Fahrzeugs um mehr als einen zweiten vorbestimmten Schwellwert abweicht.

Gemäß einer weiteren Ausführungsform des Verfahrens kann das Berechnen der aktuellen Fahrzeuggeschwindigkeit des Fahrzeugs ein Berechnen eines aktuellen Antriebsmoments aus dem ermittelten aktuellen Ausgabestrom, ein Bereinigen des berechneten aktuellen Antriebsmoments um einen aktuellen Fahrwiderstand zur Berechnung eines an den Rädern anliegenden Antriebsmoments, und ein Berechnen der aktuellen Fahrzeuggeschwindigkeit des Fahrzeugs über das bereinigte an den Rädern anliegende Antriebsmoment umfassen.

Gemäß einer weiteren Ausführungsform des Verfahrens kann das Verfahren weiterhin den Schritt des zumindest temporären Beaufschlagens des Ausgabestroms des Spannungswandlers mit einem Stromkorrekturbetrag umfassen, wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines elektrischen Antriebssystems für ein elektrisch betriebenes Fahrzeug gemäß einer Ausführungsform der vorliegenden Erfindung;
- Fig. 2: eine schematische Darstellung einer Steuereinrichtung zur Antriebsschlupfregelung gemäß einer weiteren Ausführungsform der vorliegenden Erfindung; und
- Fig. 3: eine schematische Darstellung eines Verfahrens zur Antriebsschlupfregelung in einem elektrischen Antriebssystem gemäß einer weiteren Ausführungsform der vorliegenden Erfindung.

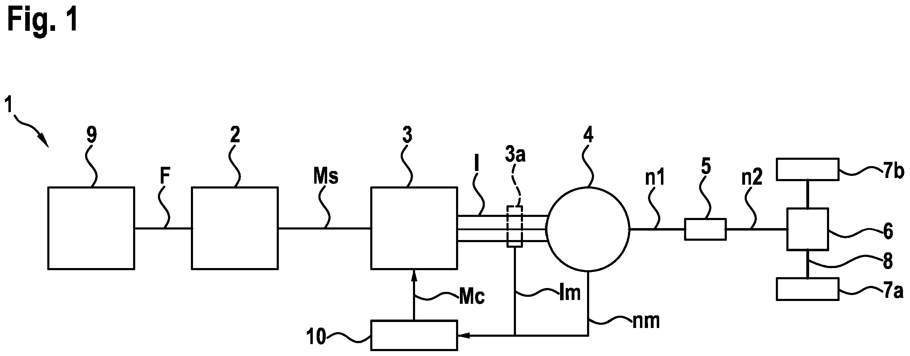

Fig. 1 zeigt ein elektrisches Antriebssystem 1 mit einem Fahrerwunschaufnehmer 9, einer Fahrzeugsteuereinheit 2, einem Spannungswandler 3 und einer elektrischen Maschine 4.

Die Einspeisung von mehrphasigem Strom in die elektrische Maschine 4 wird durch einen Spannungswandler 3, beispielsweise in Form eines Pulswechselrichters, bewerkstelligt.

Dazu kann eine von einem (nicht gezeigten) Gleichspannungszwischenkreis bereitgestellte Gleichspannung in eine n-phasige Wechselspannung, beispielsweise eine dreiphasige Wechselspannung umgerichtet werden. Der Spannungswandler 3 dient der Spannungswandlung von Gleichspannung oder Wechselspannung, die durch ein oder mehrere (nicht gezeigte) Energiespeichereinrichtungen des Fahrzeugs bereitgestellt werden, in eine n-phasige Wechselspannung. Es kann auch möglich sein, dass die Energiespeichereinrichtungen des Fahrzeugs in den Spannungswandler 3 integriert sind, beispielsweise in einem Batteriedirektumrichter (BDI). Dazu kann der Spannungswandler 3 Energiespeicherzellenmodule mit in Reihe geschalteten Batterien 5a bis 5n, beispielsweise Lithium-Ionen-Batterien aufweisen, die über Verbindungsleitungen mit Eingangsanschlüssen zugehöriger Koppeleinrichtungen verbunden. Die Koppelelemente der Koppeleinrichtungen können dabei derart angesteuert werden, beispielsweise mithilfe der Steuereinrichtung 10, dass die einzelnen Energiespeicherzellenmodule selektiv zur Spannungsversorgung der elektrischen Maschine 4 herangezogen werden. Durch geeignetes Ansteuern der Koppeleinrichtungen können daher einzelne Energiespeicherzellenmodule gezielt für die Bereitstellung einer momentanen Ausgabespannung des Spannungswandlers 3 eingesetzt werden.

Beispielhaft sind in Fig. 1 drei Phasenleitungen gezeigt, welche zur Ausgabe einer dreiphasigen Wechselspannung, beispielsweise für eine dreiphasige Drehstrommaschine 4, geeignet sind. Es ist jedoch klar, dass jede andere Anzahl n, n≥1, an Phasen für andere Maschinentypen ebenso möglich sein kann. Die elektrische Maschine 4 kann dabei beispielsweise eine Asynchronmaschine, eine Synchronmaschine, eine geschaltete Reluktanzmaschine oder eine Transversalflussmaschine umfassen.

Das elektrische Antriebssystem 1 umfasst weiterhin eine Steuereinrichtung 10, welche mit dem Spannungswandler 3 verbunden ist, und mithilfe derer der Spannungswandler 3 gesteuert werden kann, um die gewünschten Ausgangsspannungen an den jeweiligen Phasenanschlüssen der elektrischen Maschine 4 bereitzustellen.

Der Fahrer des Fahrzeugs, in dem das elektrische Antriebssystem 1 implementiert ist, teilt dem System seinen Fahrerwunsch F über den Fahrerwunschaufnehmer 9 mit, beispielsweise ein Gaspedal oder ein sonstiges Eingabegerät. Der Fahrerwunsch F, beispielsweise ein Beschleunigen, ein Bremsen oder ein Halten der Geschwindigkeit wird von der Fahrzeugsteuereinheit 2 in ein entsprechendes angefordertes Moment Ms umgesetzt, mit welchem der Spannungswandler 3 beispielsweise über einen CAN-Bus als Sollsignal angesteuert wird. Der Spannungswandler 3 seinerseits bzw. die zugehörige Steuereinrichtung 10 stellt die Ausgabespannung bzw. den Ausgabestrom I am Wandlerausgang, das heißt an den n Phasenleitungen, dergestalt ein, dass die elektrische Maschine 4 das gewünschte Solldrehmoment abgeben kann.

Die elektrische Maschine 4 bewegt dabei die angeschlossene Motorwelle mit einer Drehzahl n1, welche gegebenenfalls über ein Getriebe 5 entsprechend der Übersetzung in eine zweite Drehzahl n2 transformiert werden kann. Das angeschlossene Differential 6 verteilt das Moment dann über eine Radachse 8 auf ein oder mehrere Räder 7a, 7b.

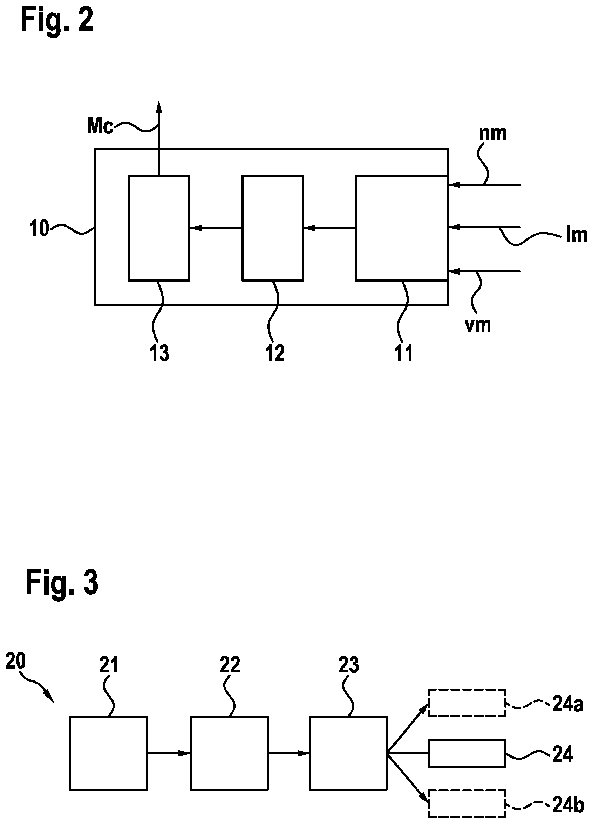

Neben der gewöhnlichen Steuerung für den Normalbetrieb des Spannungswandlers 3 kann die Steuereinrichtung 10 weiterhin eine Antriebsschlupfregelung des elektrischen Antriebssystems 1 implementieren, wie weiter unten im Zusammenhang mit Fig. 2 erläutert. Fig. 2 zeigt eine schematische Darstellung einer Steuereinrichtung 10, welche beispielsweise in dem elektrischen Antriebssystem 1 der Fig. 1 eingesetzt werden kann.

Die Steuereinrichtung 10 umfasst eine Beobachtereinheit 11, welche dazu ausgelegt ist, eine aktuelle Drehzahl nm der elektrischen Maschine 4 und einen aktuellen Ausgabestrom Im des Spannungswandlers 3 zu ermitteln. Die aktuelle Drehzahl nm kann beispielsweise direkt an der elektrischen Maschine 4 oder an der Motorwelle abgegriffen werden. Der aktuelle Ausgabestrom Im des Spannungswandlers 3 kann beispielsweise über einen Stromsensor 3a an den Phasenleitungen der elektrischen Maschine 4 abgegriffen werden. Die Beobachtereinheit 11 ist mit einer Berechnungseinheit 12 gekoppelt und übergibt die ermittelten Parameter nm und Im an die Berechnungseinheit 12. Diese wiederum kann dazu ausgelegt sein, aus dem ermittelten aktuellen Ausgabestrom Im eine aktuelle Fahrzeuggeschwindigkeit des Fahrzeugs zu berechnen.

Dazu kann die Berechnungseinheit 12 beispielsweise ein aktuelles Antriebsmoment aus dem Ausgabestrom Im berechnen. Das aktuelle Antriebsmoment ist hierbei proportional zum ermittelten Ausgabestrom Im. Durch Subtraktion eines geschwindigkeitsabhängigen Fahrwiderstands von dem aktuellen Antriebsmoment berechnet die Berechnungseinheit 12 ein bereinigtes Antriebsmoment, welches tatsächlich auf die Räder 7a, 7b wirkt. Über das geschätzte oder bekannte Fahrzeuggewicht ist es möglich, von dem bereinigten Antriebsmoment auf die Beschleunigung des Fahrzeugs zu schließen. Eine Integration über die aktuelle Beschleunigung des Fahrzeugs über einen Messzeitraum ermöglicht die Bestimmung der Fahrzeuggeschwindigkeit.

Um die Ermittlung der Fahrzeuggeschwindigkeit durch die Berechnungseinheit 12 zu plausibilisieren bzw. deren Genauigkeit zu erhöhen, kann die Beobachtereinheit 11 weiterhin eine oder mehrere Eingangsgrößen vm zur Verbesserung der geschätzten Fahrzeuggeschwindigkeit ermitteln. Die Eingangsgröße vm kann beispielweise eine dem GPS-System des Fahrzeugs bekannte Fahrzeuggeschwindigkeit oder ein ähnlicher externer Parameter sein. Die Berechnungseinheit 12 kann diese Eingangsgröße vm bei der Berechnung der Fahrzeuggeschwindigkeit des Fahrzeugs entsprechend berücksichtigen.

Zudem ist es möglich, die Fahrzeuggeschwindigkeit im Rahmen von Randbedingungen bei bekannten Fahrsituationen zu korrigieren. Beispielsweise kann bei sehr geringem Fahrmoment, welches über einen gewissen Zeitraum anliegt darauf geschlossen werden, dass die Radgeschwindigkeit der Fahrzeuggeschwindigkeit entspricht. Es kann bei positivem Antriebsmoment auch darauf geschlossen werden, dass die Fahrzeuggeschwindigkeit die Radgeschwindigkeit nicht unterschreiten darf.

Die Berechnungseinheit 12 kann schließlich die berechnete aktuelle Fahrzeuggeschwindigkeit des Fahrzeugs mit der von der ermittelten aktuellen Drehzahl nm abhängigen Radgeschwindigkeit der Räder des Fahrzeugs vergleichen. Insbesondere kann die Berechnungseinheit 12 über den Vergleich von Fahrzeuggeschwindigkeit und Radgeschwindigkeit einen zeitabhängigen Verlauf des Schlupfs der Räder 7a, 7b ermitteln. Dieser Verlauf des Schlupfs kann an eine Schlupfregeleinheit 13 weitergegeben werden, welche mit der Berechnungseinheit 12 gekoppelt ist.

Die Schlupfregeleinheit 13 ist dazu ausgelegt sein, den Ausgabestrom I des Spannungswandlers 3 (und damit das Sollmoment) zumindest temporär mit einem Stromkorrekturbetrag zu beaufschlagen, wenn die Radgeschwindigkeit der Räder von der berechneten aktuellen Fahrzeuggeschwindigkeit des Fahrzeugs um mehr als einen vorbestimmten Schwellwert abweicht, das heißt, wenn der Schlupf der Räder den vorbestimmten Schwellwert überschreitet.

Da diese Art der Antriebsschlupfregelung stark von der Qualität der Fahrzeuggeschwindigkeitsberechnung bzw. -ermittlung abhängig ist, kann es vorteilhaft sein, auf einen Regelungsmechanismus zurückzugreifen, der nicht zwingend auf die Fahrzeuggeschwindigkeitsberechnung angewiesen ist. Hierzu ist die Schlupfregeleinheit 13 dazu ausgelegt sein, den Ausgabestrom I des Spannungswandlers 3 zumindest temporär mit einem Stromkorrekturbetrag zu beaufschlagen, wenn die momentane Änderung der Radgeschwindigkeit der Räder einen anderen vorbestimmten Schwellwert überschreitet, das heißt, wenn eine zu schnelle Schlupfänderung vorliegt.

Schließlich ist es alternativ oder zusätzlich dazu auch möglich, den Ausgabestrom I des Spannungswandlers 3 durch die Schlupfregeleinheit 13 zumindest temporär mit einem Stromkorrekturbetrag zu beaufschlagen, wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht, das heißt wenn eine zu hohe Radbeschleunigung vorliegt. In letzterem Fall wird nicht auf den absoluten Wert der berechneten aktuellen Fahrzeuggeschwindigkeit zurückgegriffen, sondern nur auf eine relative Änderung des absoluten Werts. Dadurch fallen mögliche Abweichungen bei den absoluten Werten der berechneten aktuellen Fahrzeuggeschwindigkeit nicht so stark ins Gewicht.

Die Schlupfregeleinheit 13 gibt dazu ein Ausgabestromregelsignal Mc für den Spannungswandler 3 zur Antriebsschlupfregelung ab, gemäß dessen die Ansteuerung des Spannungswandlers 3 derart modifiziert wird, dass der Ausgabestrom I des Spannungswandlers 3 um den Stromkorrekturbetrag und damit das Ausgabemoment entsprechend verändert bzw. reduziert wird. Das Maß der Reduktion kann dabei anhand des berechneten Schlupfes bzw. der Änderung des Schlupfes und eines daraus ermittelten Reibbeiwertes eingestellt werden.

Der (von Null verschiedene) Stromkorrekturbetrag kann in allen Regelszenarien jeweils vorzugsweise von dem Ausgabestrom I des Spannungswandlers 3 abgezogen werden, so dass der Ausgabestrom I des Spannungswandlers 3 um den Stromkorrekturbetrag vermindert ist. Der Stromkorrekturbetrag kann dabei eine prinzipiell beliebige Größe annehmen, wobei die Größe des Stromkorrekturbetrags von einem vorbestimmten Maß des gewünschten Regeleffekts der Antriebsschlupfregelung abhängig sein kann.

Zur Stabilisierung kann die Modifizierung des Ausgabestroms I des Spannungswandlers 3 um den Stromkorrekturbetrag vollständig oder partiell über einen vorbestimmten Zeitraum hinweg aufrechterhalten werden, um die Motordrehzahl während dieses Stabilisierungszeitraums beobachten zu können. Falls sich der Antriebsschlupf nach diesem Stabilisierungszeitraum weiterhin in einem unzulässigen Bereich befinden sollte, kann ein weitergehender Regeleingriff über das Ausgabestromregelsignal Mc vorgenommen werden. Falls sich die Räder 7a, 7b nach dem Regeleingriff jedoch wieder stabilisiert haben, wird nach dem Stabilisierungszeitraum die Reduktion des Ausgabestroms I wieder aufgehoben.

Es kann auch möglich sein, einen zeitweise dauerhaften Schlupfregelungsbetrieb einzustellen, in dem der Ausgabestrom I des Spannungswandlers 3 dauerhaft oder längerfristig um den Stromkorrekturbetrag modifiziert wird. Dies kann insbesondere dann sinnvoll sein, wenn eine spezielle Fahrsituation vorliegt, beispielsweise bei einer Bergauffahrt auf verschneiter oder vereister Fahrbahn. Im Allgemeinen kann daher die durch die Steuereinrichtung 10 implementierte Antriebsschlupfregelung für einen kurzen Zeitraum im Bereich von wenigen Sekunden bis hin zu einer prinzipiell unbegrenzten längerfristigen Zeitspanne von mehreren Minuten oder gar Stunden aktiviert werden.

Fig. 3 zeigt eine schematische Illustration eines Verfahrens 20 zur Antriebsschlupfregelung in einem elektrischen Antriebssystem für ein elektrisch betriebenes Fahrzeug. Das Verfahren 20 kann insbesondere in einem elektrischen Antriebssystem 1 mit einer Steuereinrichtung 10 gemäß Fig. 1 und 2 implementiert werden.

In einem ersten Schritt 21 erfolgt ein Ermitteln einer aktuellen Drehzahl nm der elektrischen Maschine 4 und eines aktuellen Ausgabestroms Im des Spannungswandlers 3. In einem zweiten Schritt 22 erfolgt ein Berechnen einer momentanen Radgeschwindigkeit der Räder des Fahrzeugs in Abhängigkeit von der ermittelten aktuellen Drehzahl nm. Schließlich wird in einem dritten Schritt 24 der Ausgabestrom I des Spannungswandlers 3 zumindest temporär mit einem Stromkorrekturbetrag beaufschlagt werden, wenn die momentane Änderung der Radgeschwindigkeit der Räder einen ersten vorbestimmten Schwellwert überschreitet.

Parallel zum Schritt 22 wird auch in den Schritten 23a und 23b jeweils ein Berechnen einer aktuellen Fahrzeuggeschwindigkeit des Fahrzeugs aus dem ermittelten aktuellen Ausgabestrom Im und ein Vergleichen der berechneten aktuellen Fahrzeuggeschwindigkeit des Fahrzeugs mit der von der ermittelten aktuellen Drehzahl nm abhängigen Radgeschwindigkeit der Räder des Fahrzeugs erfolgen, so dass dann in Schritt 24a der Ausgabestrom I des Spannungswandlers 3 zumindest temporär mit einem Stromkorrekturbetrag beaufschlagt wird, wenn die Radgeschwindigkeit der Räder von der berechneten aktuellen Fahrzeuggeschwindigkeit des Fahrzeugs um mehr als einen zweiten vorbestimmten Schwellwert abweicht. Dabei kann das Berechnen in Schritt 23a der aktuellen Fahrzeuggeschwindigkeit des Fahrzeugs beispielsweise ein Berechnen eines aktuellen Antriebsmoments aus dem ermittelten aktuellen Ausgabestrom Im, ein Bereinigen des berechneten aktuellen Antriebsmoments um einen aktuellen Fahrwiderstand zur Berechnung eines an den Rädern anliegenden Antriebsmoments, und ein Berechnen der aktuellen Fahrzeuggeschwindigkeit des Fahrzeugs über das bereinigte an den Rädern anliegende Antriebsmoment umfassen.

Optional kann zusätzlich dazu in Schritt 24b der Ausgabestrom I des Spannungswandlers 3 ebenso zumindest temporär mit einem Stromkorrekturbetrag beaufschlagt werden, wenn die momentane Änderung der Radgeschwindigkeit der Räder einen zweiten vorbestimmten Schwellwert überschreitet und/oder wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht.

## Patentansprüche

1. Steuereinrichtung (10) für einen eine n-phasige elektrische Maschine (4), n≥1, speisenden Spannungswandler (3) eines elektrisch betriebenen Fahrzeugs, mit:
einer Beobachtereinheit (11), welche dazu ausgelegt ist, eine aktuelle Drehzahl (nm) der elektrischen Maschine (4) und einen aktuellen Ausgabestrom (Im) des Spannungswandlers (3) zu ermitteln;
einer Berechnungseinheit (12), welche mit der Beobachtereinheit (11) gekoppelt ist, und welche dazu ausgelegt ist, in Abhängigkeit von der ermittelten aktuellen Drehzahl (nm) eine momentane Radgeschwindigkeit der Räder des Fahrzeugs zu berechnen; und
einer Schlupfregeleinheit (13), welche mit der Berechnungseinheit (12) gekoppelt ist, und welche dazu ausgelegt ist, den Ausgabestrom (I) des Spannungswandlers (3) zumindest temporär mit einem Stromkorrekturbetrag zu beaufschlagen, wenn die momentane Änderung der Radgeschwindigkeit der Räder einen ersten vorbestimmten Schwellwert überschreitet,
wobei die Schlupfregeleinheit (13) weiterhin dazu ausgelegt ist, aus dem ermittelten aktuellen Ausgabestrom (Im) eine aktuelle Fahrzeuggeschwindigkeit des Fahrzeugs zu berechnen und die berechnete aktuelle Fahrzeuggeschwindigkeit des Fahrzeugs mit der von der ermittelten aktuellen Drehzahl (nm) abhängigen Radgeschwindigkeit der Räder des Fahrzeugs zu vergleichen, und den Ausgabestrom (I) des Spannungswandlers (3) zumindest temporär mit einem Stromkorrekturbetrag zu beaufschlagen, wenn die Radgeschwindigkeit der Räder von der berechneten aktuellen Fahrzeuggeschwindigkeit des Fahrzeugs um mehr als einen zweiten vorbestimmten Schwellwert abweicht.

2. Steuereinrichtung (10) nach Anspruch 1, wobei die Berechnungseinheit (12) weiterhin dazu ausgelegt ist, aus dem ermittelten aktuellen Ausgabestrom (Im) ein aktuelles Antriebsmoment zu berechnen, das berechnete aktuelle Antriebsmoment um einen aktuellen Fahrwiderstand zur Berechnung eines an den Rädern anliegenden Antriebsmoments zu bereinigen und das bereinigte an den Rädern anliegende Antriebsmoment zur Berechnung der aktuellen Fahrzeuggeschwindigkeit des Fahrzeugs heranzuziehen.

3. Steuereinrichtung (10) nach einem der Ansprüche 1 und 2, wobei die Schlupfregeleinheit (13) weiterhin dazu ausgelegt ist, den Ausgabestrom (I) des Spannungswandlers (3) zumindest temporär mit einem Stromkorrekturbetrag zu beaufschlagen, wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht.

4. Elektrisches Antriebssystem (1) für ein elektrisch betriebenes Fahrzeug, mit:
einer n-phasigen elektrischen Maschine (4), mit n≥1;
einem Spannungswandler (3), welcher mit der n-phasigen elektrischen Maschine (4) gekoppelt ist, und welcher dazu ausgelegt ist, eine n-phasige Versorgungsspannung für die elektrische Maschine (4) bereitzustellen; und
einer Steuereinrichtung (10) nach einem der Ansprüche 1 bis 3, welche mit der elektrischen Maschine (4) und dem Spannungswandler (3) gekoppelt ist, und welche dazu ausgelegt ist, ein Ausgabestromregelsignal (Mc) für den Spannungswandler (3) zur Antriebsschlupfregelung bereitzustellen.

5. Elektrisch betriebenes Fahrzeug mit einem elektrischen Antriebssystem nach Anspruch 4.

6. Verfahren (20) zur Antriebsschlupfregelung in einem elektrischen Antriebssystem (1) für ein elektrisch betriebenes Fahrzeug, welches einen eine n-phasige elektrische Maschine (4), n≥1, speisenden Spannungswandler (3) eines elektrisch betriebenen Fahrzeugs aufweist, wobei das Verfahren die Schritte aufweist:
Ermitteln (21) einer aktuellen Drehzahl (nm) der elektrischen Maschine (4) und eines aktuellen Ausgabestroms (Im) des Spannungswandlers (3);
Berechnen (22) einer momentanen Radgeschwindigkeit der Räder des Fahrzeugs in Abhängigkeit von der ermittelten aktuellen Drehzahl (nm); und
zumindest temporäres Beaufschlagen (24) des Ausgabestroms (I) des Spannungswandlers (3) mit einem Stromkorrekturbetrag, wenn die momentane Änderung der Radgeschwindigkeit der Räder einen ersten vorbestimmten Schwellwert überschreitet,
Berechnen (23a) einer aktuellen Fahrzeuggeschwindigkeit des Fahrzeugs aus dem ermittelten aktuellen Ausgabestrom (Im);
Vergleichen (23b) der berechneten aktuellen Fahrzeuggeschwindigkeit des Fahrzeugs mit der von der ermittelten aktuellen Drehzahl (nm) abhängigen Radgeschwindigkeit der Räder des Fahrzeugs; und
zumindest temporäres Beaufschlagen (24a) des Ausgabestroms (I) des Spannungswandlers (3) mit einem Stromkorrekturbetrag, wenn die Radgeschwindigkeit der Räder von der berechneten aktuellen Fahrzeuggeschwindigkeit des Fahrzeugs um mehr als einen zweiten vorbestimmten Schwellwert abweicht.

7. Verfahren (20) nach Anspruch 6, wobei das Berechnen (23a) der aktuellen Fahrzeuggeschwindigkeit des Fahrzeugs umfasst:
Berechnen eines aktuellen Antriebsmoments aus dem ermittelten aktuellen Ausgabestrom (Im);
Bereinigen des berechneten aktuellen Antriebsmoments um einen aktuellen Fahrwiderstand zur Berechnung eines an den Rädern anliegenden Antriebsmoments; und
Berechnen der aktuellen Fahrzeuggeschwindigkeit des Fahrzeugs über das bereinigte an den Rädern anliegende Antriebsmoment.

8. Verfahren (20) nach einem der Ansprüche 6 und 7, weiterhin mit dem Schritt:
zumindest temporäres Beaufschlagen (24b) des Ausgabestroms (I) des Spannungswandlers (3) mit einem Stromkorrekturbetrag, wenn die momentane Änderung der Radgeschwindigkeit der Räder von der Änderung der berechneten aktuellen Fahrzeuggeschwindigkeit des Fahrzeugs um mehr als einen dritten vorbestimmten Schwellwert abweicht.

## Claims

1. Control device (10) for a voltage transformer (3) of an electrically operated vehicle, which voltage transformer feeds an n-phase electric machine (4), n ≥ 1, comprising:
an observer unit (11) which is designed to determine a present rotation speed (nm) of the electric machine (4) and a present output current (Im) of the voltage transformer (3);
a calculation unit (12) which is coupled to the observer unit (11) and which is designed to calculate an instantaneous wheel speed of the wheels of the vehicle depending on the determined present rotation speed (nm); and
a slip control unit (13) which is coupled to the calculation unit (12) and which is designed to at least temporarily apply a current correction amount to the output current (I) of the voltage transformer (3) if the instantaneous change in the wheel speed of the wheels exceeds a first predetermined threshold value,
wherein the slip control unit (13) is further designed to calculate a present vehicle speed of the vehicle from the determined present output current (Im) and to compare the calculated present vehicle speed of the vehicle with the wheel speed of the wheels of the vehicle which is dependent on the determined present rotation speed (nm), and to at least temporarily apply a current correction amount to the output current (I) of the voltage transformer (3) if the wheel speed of the wheels differs from the calculated present vehicle speed of the vehicle by more than a second predetermined threshold value.

2. Control device (10) according to Claim 1, wherein the calculation unit (12) is further designed to calculate a present drive torque from the determined present output current (Im), to adjust the calculated present drive torque by a present driving resistance for calculating a drive torque applied to the wheels, and to use the adjusted drive torque applied to the wheels for calculating the present vehicle speed of the vehicle.

3. Control device (10) according to either of Claims 1 and 2, wherein the slip control unit (13) is further designed to at least temporarily apply a current correction amount to the output current (I) of the voltage transformer (3) if the present change in the wheel speed of the wheels differs from the change in the calculated present vehicle speed of the vehicle by more than a third predetermined threshold value.

4. Electrical drive system (1) for an electrically operated vehicle, comprising:
an n-phase electric machine (4), where n ≥ 1;
a voltage transformer (3) which is coupled to the n-phase electric machine (4) and which is designed to provide an n-phase supply voltage for the electric machine (4); and
a control device (10) according to one of Claims 1 to 3 which is coupled to the electric machine (4) and to the voltage transformer (3) and which is designed to provide an output current control signal (Mc) for the voltage transformer (3) for drive slip control.

5. Electrically operated vehicle comprising an electrical drive system according to Claim 4.

6. Method (20) for drive slip control in an electrical drive system (1) for an electrically operated vehicle which has a voltage transformer (3) of an electrically operated vehicle, which voltage transformer feeds an n-phase electric machine (4), n ≥ 1, wherein the method comprises the steps of:
determining (21) a present rotation speed (nm) of the electric machine (4) and a present output current (Im) of the voltage transformer (3);
calculating (22) an instantaneous wheel speed of the wheels of the vehicle depending on the determined present rotation speed (nm); and
at least temporarily applying (24) a current correction amount to the output current (I) of the voltage transformer (3) if the instantaneous change in the wheel speed of the wheels exceeds a first predetermined threshold value,
calculating (23a) a present vehicle speed of the vehicle from the determined present output current (Im);
comparing (23b) the calculated present vehicle speed of the vehicle with the wheel speed of the wheels of the vehicle which is dependent on the determined present rotation speed (nm); and
at least temporarily applying (24a) a current correction amount to the output current (I) of the voltage transformer (3) if the wheel speed of the wheels differs from the calculated present vehicle speed of the vehicle by more than a second predetermined threshold value.

7. Method (20) according to Claim 6, wherein calculating (23a) the present vehicle speed of the vehicle comprises:
calculating a present drive torque from the determined present output current (Im);
adjusting the calculated present drive torque by a present driving resistance for calculating a drive torque applied to the wheels; and
calculating the present vehicle speed of the vehicle using the adjusted drive torque applied to the wheels.

8. Method (20) according to either of Claims 6 and 7, further comprising the step of:
at least temporarily applying (24b) a current correction amount to the output current (I) of the voltage transformer (3) if the instantaneous change in the wheel speed of the wheels differs from the change in the calculated present vehicle speed of the vehicle by more than a third predetermined threshold value.

## Revendications

1. Dispositif de commande (10) pour un transformateur de tension (3) d'un véhicule à propulsion électrique, qui alimente une machine électrique (4) à n phases, n ≥ 1, comprenant :
une unité d'observation (11) qui est conçue pour déterminer une vitesse de rotation actuelle (nm) de la machine électrique (4) et un courant de sortie actuel (Im) du transformateur de tension (3) ;
une unité de calcul (12) qui est couplée à l'unité d'observation (11) et qui est conçue pour calculer une vitesse de roue instantanée des roues du véhicule en fonction de la vitesse de rotation actuelle (nm) déterminée ; et
une unité de régulation antipatinage (13) qui est couplée à l'unité de calcul (12) et qui est conçue pour appliquer au courant de sortie (I) du transformateur de tension (3) au moins temporairement une quantité de correction de courant si la variation instantanée de la vitesse de roue des roues dépasse une première valeur seuil prédéterminée,
l'unité de régulation antipatinage (13) étant en outre conçue pour calculer à partir du courant de sortie actuel (Im) déterminé une vitesse de véhicule actuelle du véhicule et pour comparer la vitesse de véhicule actuelle calculée du véhicule avec la vitesse de roue dépendante de la vitesse de rotation actuelle (nm) déterminée des roues du véhicule, et pour appliquer au courant de sortie (I) du transformateur de tension (3) au moins temporairement une quantité de correction de courant si la vitesse de roue des roues dévie de la vitesse de véhicule actuelle calculée du véhicule de plus d'une deuxième valeur seuil prédéterminée.

2. Dispositif de commande (10) selon la revendication 1, dans lequel l'unité de calcul (12) est en outre conçue pour calculer un couple d'entraînement actuel à partir du courant de sortie actuel (Im) déterminé, pour rectifier le couple d'entraînement actuel calculé d'une résistance à l'avancement actuelle afin de calculer un couple d'entraînement appliqué aux roues, et pour faire appel au couple d'entraînement rectifié, appliqué aux roues, pour le calcul de la vitesse de véhicule actuelle du véhicule.

3. Dispositif de commande (10) selon l'une quelconque des revendications 1 et 2, dans lequel l'unité de régulation antipatinage (13) est en outre conçue pour appliquer au courant de sortie (I) du transformateur de tension (3) au moins temporairement une quantité de correction de courant si la variation instantanée de la vitesse de roue des roues dévie de la variation de la vitesse de véhicule actuelle calculée du véhicule de plus d'une troisième valeur seuil prédéterminée.

4. Système d'entraînement électrique (1) pour un véhicule à propulsion électrique, comprenant :
une machine électrique (4) à n phases, où n ≥ 1 ;
un transformateur de tension (3) qui est couplé à la machine électrique (4) à n phases et qui est conçu pour fournir une tension d'alimentation à n phases pour la machine électrique (4) ; et
un dispositif de commande (10) selon l'une quelconque des revendications 1 à 3 qui est couplé à la machine électrique (4) et au transformateur de tension (3), et qui est conçu pour fournir un signal de régulation de courant de sortie (Mc) pour le transformateur de tension (3) en vue de la régulation antipatinage.

5. Véhicule à propulsion électrique, comprenant un système d'entraînement électrique selon la revendication 4.

6. Procédé (20) de régulation antipatinage dans un système d'entraînement électrique (1) pour un véhicule à propulsion électrique qui présente un transformateur de tension (3) d'un véhicule à propulsion électrique, qui alimente une machine électrique à n phases (4), n ≥ 1, le procédé présentant les étapes consistant à :
déterminer (21) une vitesse de rotation actuelle (nm) de la machine électrique (4) et un courant de sortie actuel (Im) du transformateur de tension (3) ;
calculer (22) une vitesse de roue instantanée des roues du véhicule en fonction de la vitesse de rotation actuelle (nm) déterminée ; et
appliquer (24) au moins temporairement une quantité de correction de courant au courant de sortie (I) du transformateur de tension (3) si la variation instantanée de la vitesse de roue des roues dépasse une première valeur seuil prédéterminée,
calculer (23a) une vitesse de véhicule actuelle du véhicule à partir du courant de sortie actuel (Im) déterminé ;
comparer (23b) la vitesse de véhicule actuelle calculée du véhicule avec la vitesse de roue, dépendante de la vitesse de rotation actuelle (nm) déterminée, des roues du véhicule ; et
appliquer (24a) au moins temporairement une quantité de correction de courant au courant de sortie (I) du transformateur de tension (3) si la vitesse de roue des roues dévie de la vitesse de véhicule actuelle calculée du véhicule de plus d'une deuxième valeur seuil prédéterminée.

7. Procédé (20) selon la revendication 6, dans lequel le calcul (23a) de la vitesse de véhicule actuelle du véhicule comprend :
calculer un couple d'entraînement actuel à partir du courant de sortie actuel (Im) déterminé ;
rectifier le couple d'entraînement actuel calculé d'une résistance à l'avancement actuelle pour calculer un couple d'entraînement appliqué aux roues ; et
calculer la vitesse de véhicule actuelle du véhicule par l'intermédiaire du couple d'entraînement rectifié, appliqué aux roues.

8. Procédé (20) selon l'une quelconque des revendications 6 et 7, comprenant en outre l'étape consistant à :
appliquer (24b) au moins temporairement une quantité de correction de courant au courant de sortie (I) du transformateur de tension (3) si la variation instantanée de la vitesse de roue des roues dévie de la variation de la vitesse de véhicule actuelle calculée du véhicule de plus d'une troisième valeur seuil prédéterminée.
